# EUROPEAN PATENT SPECIFICATION

(11) **EP 3 063 403 B1**
(45) Date of publication and mention of the grant of the patent: **03.01.2018**
(21) Application number: 14736976.3
(22) Date of filing: 29.05.2014
(51) Int. Cl.: F03D 3/06

(54) **A VERTICAL AXIS WIND TURBINE WITH A SYSTEM FOR REGULATING THE ANGLE OF ATTACK OF THE BLADES**
WINDTURBINE MIT VERTIKALER ACHSE MIT EINEM SYSTEM ZUR REGELUNG DES ANSTELLWINKELS DER SCHAUFELN
TURBINE ÉOLIENNE À AXE VERTICAL DOTÉE D'UN SYSTÈME PERMETTANT DE RÉGLER L'ANGLE D'ATTAQUE DES PALES

(30) Priority: 29.05.2013 IT PI20130046
(43) Date of publication of application: 07.09.2016
(73) Proprietor: Chiodo, Antonio, 56125 Pisa (IT)
(72) Inventor: Chiodo, Antonio, 56125 Pisa (IT)
(74) Representative: Soldatini, Andrea
(86) International application number: PCT/IB2014/061807
(87) International publication number: WO 2014/191949

(56) References cited:
- EP-A2- 0 065 778
- WO-A1-2004/074680
- BE-A1- 859 981
- FR-A1- 2 289 764
- GB-A- 396 368

## Description

### Technical field of the invention

The present invention relates to a wind turbine with vertical axis (that is, with the rotor oriented with its axis of rotation perpendicular to the ground) with a system for regulating the angle of attack of the blades of the turbine itself. In particular, the adjustment system allows varying the positioning angle of the turbine blades, during the revolution motion of the same about the axis of rotation of the turbine, depending on the direction of the incident wind.

### Background to the invention

Horizontal axis wind turbines (i.e. turbines wherein the axis of rotation must be oriented parallel to the direction of the wind) with systems for regulating the angle of attack of the blades are known. In such turbines, the angle adjustment is carried out as a function of the incident wind speed and the speed of rotation of the blades, but not according to the incident wind direction. To cope with the variability of the wind direction, the entire turbine with horizontal axis is shifted so that it is oriented in a direction favorable to the wind direction. Given the speed with which the wind changes direction and the inertia of the horizontal axis turbines (especially large ones), this adjustment is not completely effective, especially when the variability of the wind direction is sudden and frequent such as in the case of swirling winds. This is a drawback of this type of turbines.

In the case of a wind turbine with a horizontal axis, the punctual speed on the blade profile will be directly proportional to the distance of the point of the blade from the axis of rotation of the turbine. The adjustment of the angle of attack of the blade therefore has the aim to optimize the position of the blade to maximize the punctual speed on each point of the blade profile as a function of the incident wind speed.

In the case of a wind turbine with vertical axis, which is that specifically considered by the present invention, the blades develop in a predominantly vertical direction or in any case with all points of the sectional profile of the blade substantially at the same distance from the axis of rotation. Therefore, during the rotation, the punctual tangential speed on the entire profile of the blade is the same, and no adjustment is required which takes into account any variations in speed along said profile, as otherwise required by horizontal axis turbines. This vertical axis wind turbine is therefore independent of the direction of the incident wind. However, during the rotation of the vertical blades about the axis of rotation of the turbine, these will provide a greater or lesser contribution to the speed of rotation of the turbine, depending on the position taken during the revolution motion, a position that is each time oriented in a different way in relation to the direction of the incident wind.

Systems have been proposed for varying the angle of attack of the turbine, none of which, to the applicant's knowledge, has proven effective under the joint profiles of efficiency, reliability and even more generally of constructive feasibility; in fact, no significant embodiments thereof result currently reduced to practice. A wind turbine according to the prior art is described in BE859981A1.

### Summary of the invention

Precisely, the object of the present invention is to provide a wind turbine with vertical axis with an adjustment system of the blades, such as to vary the angle of attack of the blade as a function of the position taken thereby during the complete rotation about the turbine axis and also taking into account automatically of any changes in the direction of the incident wind, all with a fully efficient, reliable and relatively simple construction.

Such object is achieved by the vertical axis wind turbine whose essential features are defined by the first of the annexed claims.

### Brief description of the drawings

The features and the advantages of the turbine according to the present invention will now become apparent with the following description of an embodiment thereof, made by way of a non-limiting example with reference to the annexed drawings, wherein:
- figure 1 is a top view of the regulation system of the turbine according to the invention which shows a driving wheel, a planetary wheel and a first group of driven wheels;
- figure 2 is a perspective view of the regulation system of figure 1;
- figure 3 shows in isolation the driving wheel of the previous figures;
- figure 4 is a perspective view of only the first group of driven wheels of the previous figures;
- figure 5 shows in isolation the planetary wheel and its support system and connection to the turbine shaft (not shown);
- figure 6 shows a first variant of systems for detecting the direction of the incident wind associated with the planetary wheel;
- figure 7 shows a second variant of systems for detecting the direction of the incident wind associated with the planetary wheel;
- figure 8 is a general diagram of the variation of the angle of attack of the blade, between the minimum and maximum oscillation;
- figure 9 shows in isolation and from above a support system of further driven wheels which mesh on the driven wheels described above;
- figure 10 shows in perspective and in detail the support system of the further driven wheels;
- figure 11 is a perspective view of the regulation system which only shows the driving wheel and the two groups of driven wheels;
- figure 12 is a diagram of the number of variations in the setup of the blade during the complete revolution of the turbine;
- figure 13 is yet another perspective view of the regulation system which separately shows the second driving wheels and rack half-wheels connected thereto;
- figure 14 shows in detail the connection between the second driven wheel and the rack half-wheel of figure 13;
- figure 15 shows a schematic axonometric view of the turbine;
- figure 16 shows a top view of the turbine; and
- figure 16a shows an enlargement of the attachment area of a blade, circled in figure 16.

### Detailed description of the invention

The vertical axis wind turbine according to the invention comprises a control or adjustment/regulation system that allows for the variation of the angle of attack of the blades during the revolution of the same about the central axis of rotation of the turbine, in order to optimize the position/orientation of the blade itself with respect to the incident wind.

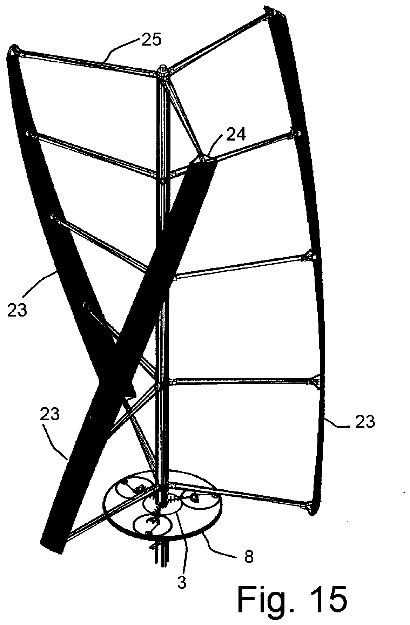

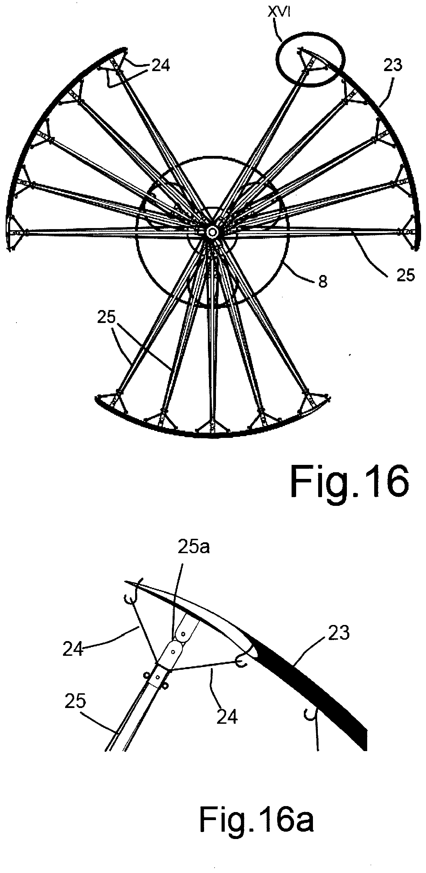

In the example shown in the figures, the vertical axis wind turbine has a number of blades equal to three. Each blade 23, visible in figures 15, 16, 16a, is provided with its own regulation system, which clearly uses an oscillating mounting/support of the blade itself about its own angling axis in turn having a substantially vertical development (as will be seen hereafter). However, the adjustment system, to be described in detail further on, can be similarly applied to turbines with a different number of blades. Blades 23 have in this case helical evolution on an imaginary cylinder or cylindroid centered on the axis, but the invention likewise applies to actual straight vertical blades or in any case to any configuration in which it may be advantageous.

In particular, the regulation system associated with the wind turbine comprises a driving wheel/gear 3 with external teeth, concentric to and integral with the rotation shaft 2 of the turbine, with axis of rotation 1. Such a fixed axis is determined by a bearing pin 18. Clearly, such a driving wheel rotates at the same speed as the turbine shaft, being passively carried into rotation thereby. First driven wheels/gears 4 mesh on said driving gear 3. Such wheels are equal in number to the number of blades of the turbine, three in the example shown, and have a radius equal to that of the driving wheel.

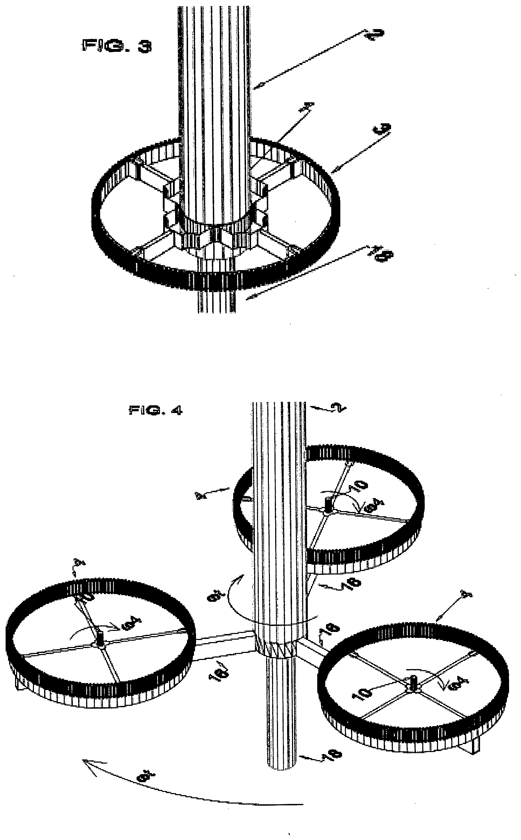

The first driven gears 4 are supported by a connection member 16 that makes their rotation axes integral with the turbine shaft (figure 4). This connection member comprises a central ring (integral with shaft 2) from which arms equal in number to the number of wheels extend radially. Each arm supports its own shaft 10 on which the respective driven wheel is rotatably connected. Wheels 4 therefore have two possibilities of movement of a different kind, the first rotation about their own axis of rotation 10, the second one of revolution about axis 1 of the turbine.

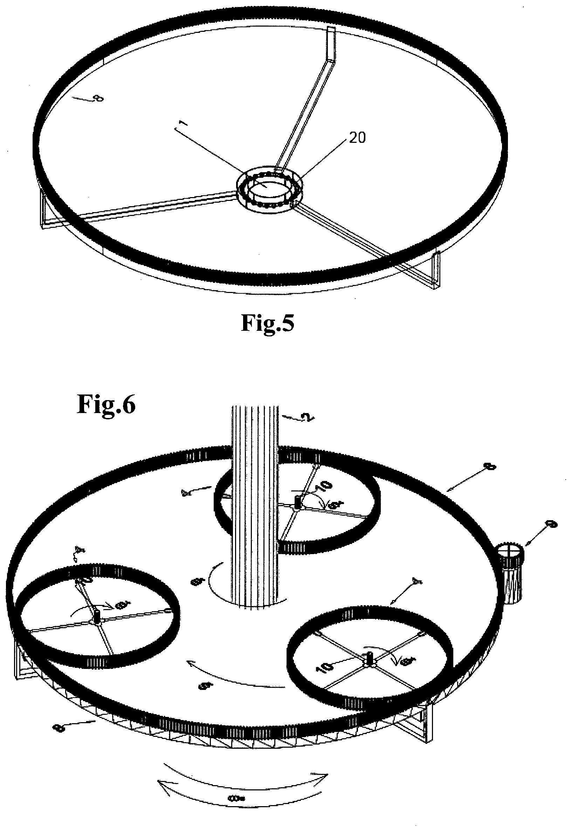

The driven gears 4 have double toothing, both internal and external. The external toothing meshes with the aforementioned driving wheel 3. At the same time, the driven wheels mesh, always with their external toothing, also on a single planetary wheel/gear 8 which evolves, again centered on axis 1 and rotatable relative thereto, with a radius twice the above driving and first driven wheels. Such a planetary wheel 8 is independent with respect to shaft 2 as far as rotation is concerned, being rotatably connected to the support pin 18 by a bearing 20, as shown in figure 5.

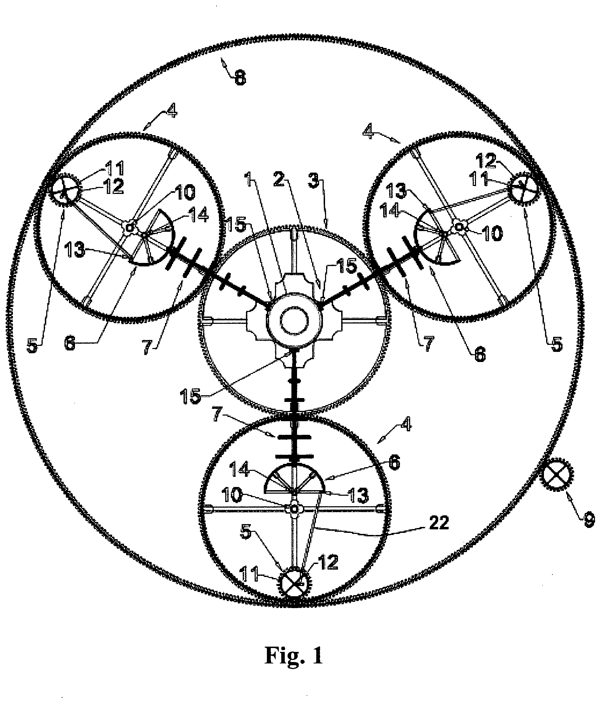

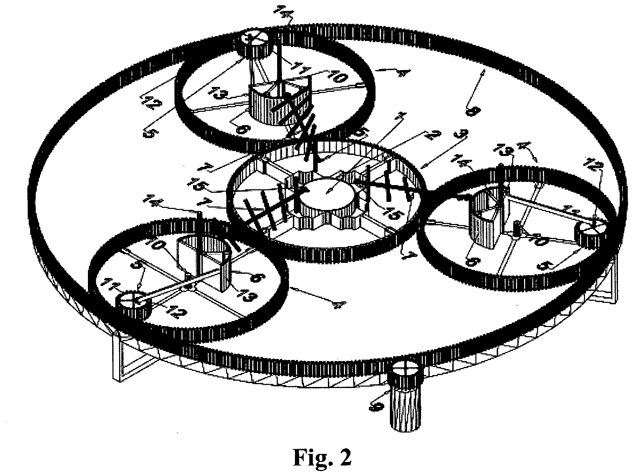

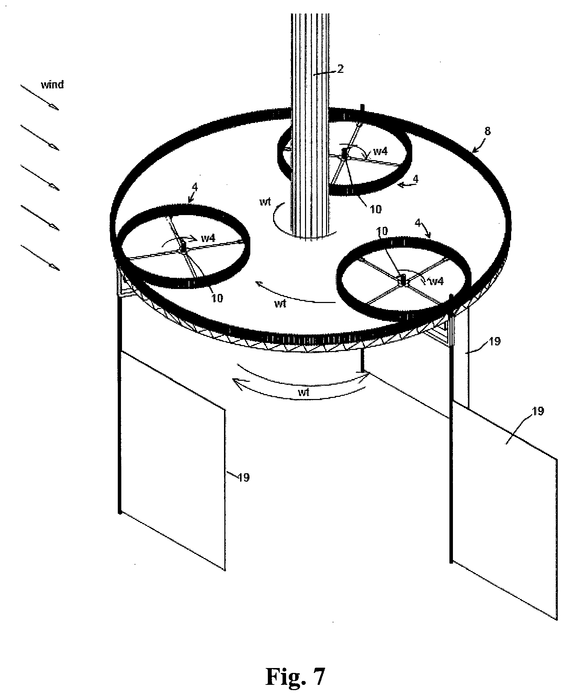

The planetary gear 8 is associated with resetting means based on the detection of the direction of the incident wind. These means allow for the stabilization of the planetary wheel in invariance in the wind direction, and at the same time they drive a movement of said wheel in response to a change in the incident wind direction. For example, as shown in figure 7, these setting means can consist of directional rudders 19 rigidly fixed to wheel 8, or in particular its support structure, so as to drive by sail effect the rotation of the wheel itself as a function of wind they are impinged with, while keeping it stationary when the wind is constant. Such resetting (and detection) means may also be provided with electronic detection systems that actuate a further servo-motorized wheel 9 (example shown in figures 1, 2 and 6) which moves the planetary wheel. When the wind is invariant in direction, the planetary wheel 8 is stationary, while it undergoes an angular displacement as a result of a corresponding angular wind shift.

From the above description it follows that the first driven wheels 4 have two concurrent and combined drives due to the concurrent engagement with the driving wheel 3 and with the planetary wheel 8 (and to the concurrent movement of rotation of the latter according to the wind). In particular, in a situation of normal operational behavior, the planetary wheel 8 is stationary (because the wind does not change its direction), the first driven wheels 4 are pulled into rotation in the revolution motion about the turbine axis due to the revolution of their own axes integral with shaft 2 but simultaneously perform a relative rotation motion about said respective axes because of the engagement with the planetary wheel 8.

In case the wind changes direction, there will be a rotary motion of the planetary gear 8 at the same speed as the shaft. This result, achieved precisely with an obvious implementation of sensors and appropriate operative instructions in case of control of the servo-motorized wheel 9, will be easily implemented also in the case of rudder control with a simple optimization work, possibly empirical in nature. In fact, considering the two systems that are affected by the energy of the incident wind, the first consisting of the wind turbine itself to which an electric generator is coupled, either directly or indirect, and the second one of the adjustment system of the angle of attack of the blades, it is clear that the speed at which the first system rotates is affected by the absorption of energy by the generator.

The energy required to operate the regulation system is limited to providing the actuation by overcoming the friction and is far lower than that absorbed by the electric generator. The rudders are, as stated, configured and oriented to keep wheel 8 stationary with a wind having constant direction. On the other hand, when the direction changes they cause the rotation of the planetary gear., and if they had the same geometric shape as the turbine blades (same airfoil), considering the energy balance just described, the system would rotate at a speed higher than that of the turbine. It will therefore be sufficient to determine the energy that the rubber must absorb from the wind incident thereon when the same wind changes direction (through the identification of the size and shape of the rudders themselves) to ensure that the dissipation is optimal to cause the adjustment system to rotate at the same speed as the turbine connected to the generator.

Therefore, if with the electronic implementation through wheel 9 the feasibility of the result is of more immediate understanding (a sensor detects the rotation speed of the turbine, another sensor detects the wind direction and its change, an actuation controlled accordingly through an electronic management system performs the controlled drive of the planetary wheel 8 at the required speed), the above clarifications demonstrate the full feasibility also with purely mechanical systems, only an optimization of obvious nature being required.

The event just mentioned, i.e. the angular displacement of the planetary gear 8 at the speed of the driving gear 3, corresponds to a reset step in which, since the relative rotation of first driven gears 4 is influenced by the speed gradient between the driving wheel 3 and the planetary wheel 8, the above relative rotation will be null and wheels 4 will only move in revolution about axis 1. This reset step will be discussed in more detail hereafter.

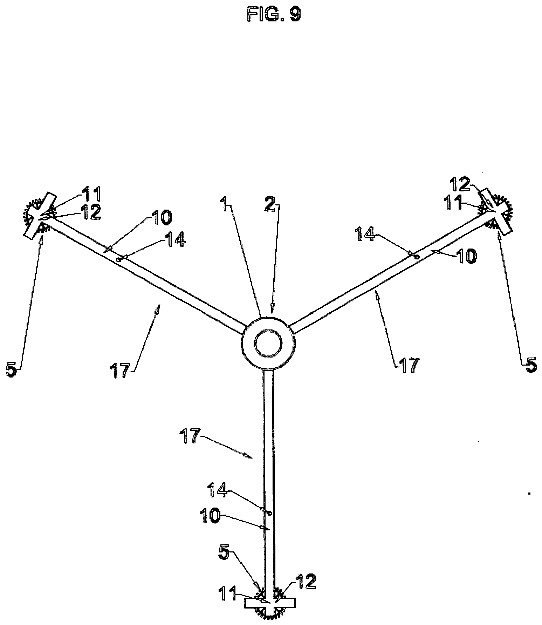

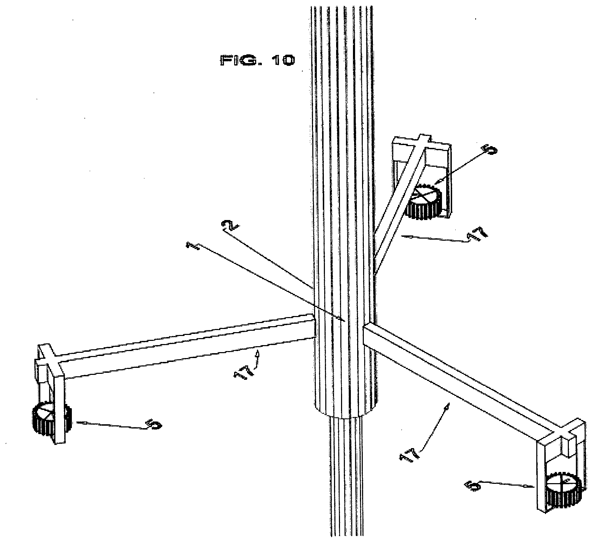

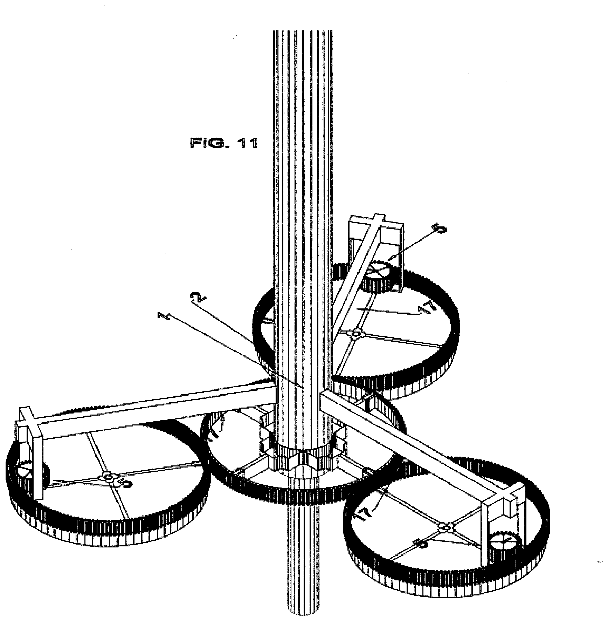

With reference now particularly to figures 9 to 14, the regulation system according to the invention further comprises a second group of driven gears/wheels 5 each of which (having an external toothing 21) meshes on the internal toothing of the above mentioned first driven wheels 4. Each second driven wheel 5 is rotatably connected to its own support arm 17, which defines an axis of rotation 11, arm which extends integrally from the shaft of turbine 2. Therefore, the relative rotation of the second driven wheels 5 about their axis of rotation 11 is determined by the rotation of the first driven wheels 4 about their axis 10.

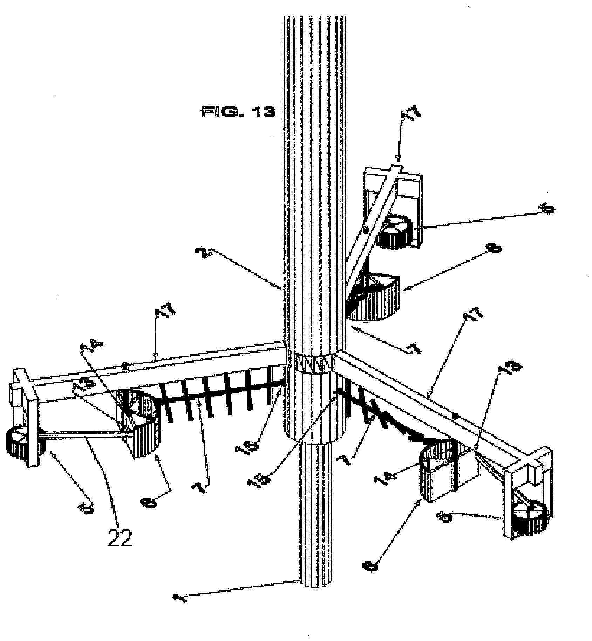

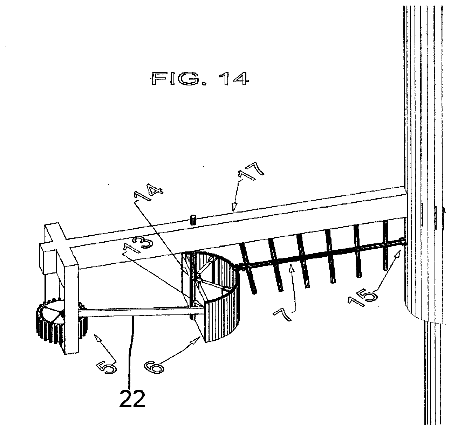

Between each of the second driven wheels 5 (see in particular figures 13 and 14) and the relative blade 23 of the turbine there are arranged transmission means, so that a relative rotation of a second driven wheel corresponds, by the effect indeed of such transmission means, to the variation in the attachment angle of the blade. In particular, these transmission means may include as in the example shown (but other equivalent solutions may be adopted), a transmission arm 22 rotatably coupled with its ends respectively to the second driven wheel 5 (attachment point 12) and to a half-wheel 6 (attachment point 13) having an outer rack profile, so as to determine a connecting rod-crank type mechanism.

The half-wheel is rotatably constrained about its own vertical axis of rotation 14 which is still integral with the support arm 17, and the attachment points 12, 13 of arm 22 are spaced, respectively on the wheel and on the half-wheel, by the relative axes of rotation 11, 14. The half-wheel 6 is in turn operatively linked to the relative blade 23, which is mounted on an oscillating joint 25a at the end of a beam 25 protruding from shaft 2, so that the blade itself can vary its angle on a plane orthogonal to the axis, i.e. about an own angle/oscillation axis usually substantially median, parallel to the central axis 1. Such operative connection is preferably carried out by means of a bar 7 which, extending radially from shaft 2, is linked thereto with a first end 15 so as to be rotatable about its own axis. The other end of bar 7 is connected to the rack profile of the half-wheel 6, receiving thereby a rotary drive (alternating clockwise-counterclockwise) by meshing in response to the reciprocating oscillations of the same half-wheel.

This rotation, by means for example of wires 24 (figure 16) and the relative deviations extending between bar 7 and blade 23 along shaft 2 and beams 25, as shown in figure 15, is converted into an oscillatory movement of the blade to sweep a predetermined angle. In particular, bar 7 allows the simultaneous winding and unwinding of pairs of wires 24 wound around the bar, each pair being connected at the opposite ends respectively to the tip and the tail of the airfoil (blade section). For each pair, the winding of a wire on the bar corresponds to the unwinding of the other one with same winding and unwinding lengths. Such winding and unwinding allow exerting a pull of the airfoil on the tip releasing the tail and vice versa. Determining the diameter of bar 7 will define the length to be imparted to the winding-unwinding of the wires and therefore the "opening" or "closing" extent of the corresponding blade.

Therefore, the relative rotation of the second driven gear 5, in turn determined by the relative rotation of the first driven gear 4 (rotation that under normal operating conditions of stable wind is determined by the stationary condition of the planetary wheel 8), via arm 22 causes a controlled oscillation of the rack half-wheel 6 relative to its axis of rotation 14 and hence, as mentioned, an oscillating variation of the angle of attack of the blade during the 360°rotation of the shaft of turbine 2.

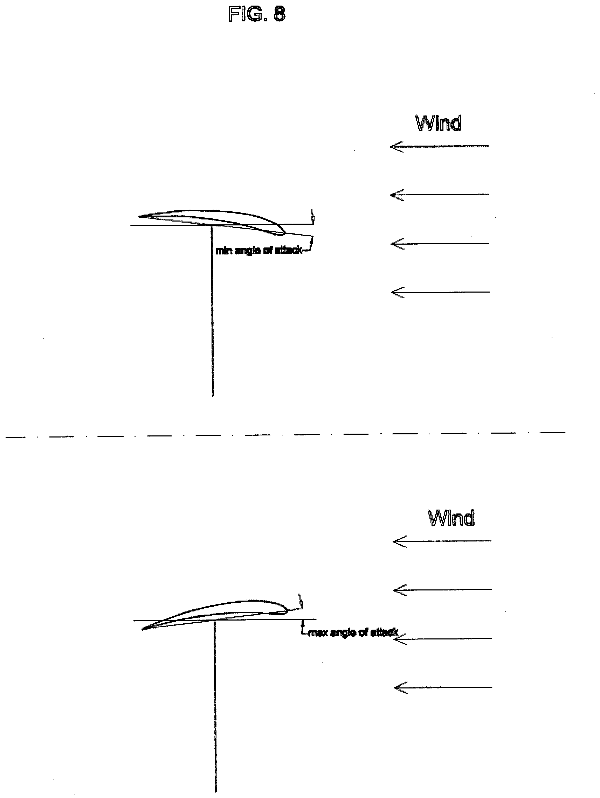

In greater detail, a lower dead point of the so-called connecting rod-crank system corresponds to a minimum value of angle of attack of the blade, while the upper dead point of the connecting rod-crank system corresponds to the maximum angle of attack. Figure 8 clarifies these two extreme stop positions of the blade in relation to the wind direction, being it understood that the movement controlled between them for example by said wires 24 will take place with continuity, more or less quickly depending on the greater or lesser wind speed.

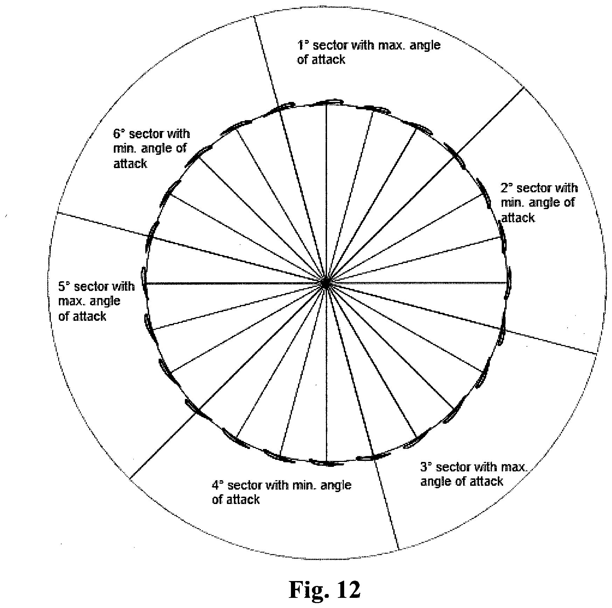

The number of times that the angle of attack of the blade is changed during a complete revolution about the shaft of turbine 2 (which still in normal operating conditions corresponds to a complete revolution of each first driven wheel 4) is a function of the diameter ratio between each first driven wheel 4 and the second driven wheel 5. In the example, as shown in figure 12, the diameter ratio between the two driven wheels being of 6: 1, the adjustment of the positioning of the blade is made with six inversions in the complete revolution of the driving wheel, and then in one revolution cycle of the blades, so that six swept sextants are identified, alternating between sextants which correspond to an increasing angle of attack and sextants which correspond to a decreasing angle of attack. This solution can be in some conditions the best compromise between efficiency and the need to not overstress the control/adjustment system but clearly, other ratios may be chosen according to the circumstances (e.g. 4: 1 or 8: 1), with the consequent division of the cycle into quadrants, octants, etc.

The regulation is obviously set so that the angle of attack is always the most favorable as a function of the wind direction (see also what specified below). When the wind changes direction, there is an automatic reset of the system, meaning that by the effect of the corresponding rotation of the planetary wheel, the distribution of said sectors (sextants or similar, depending on the design choices) is displaced by an angle equal to the wind shift angle, again to ensure the same optimization. The relationship of equality between the diameter of the first driven wheels 4 and that of the driving wheel 3 clearly represents an optimal solution, allowing an effective control of the position of the blade angle in relation to the revolution position.

The turbine according to the invention therefore has a completely new configuration achieving the objective of varying the angle of attack of the turbine blades as a function of the incidence angle of the wind, even with an automatic reset in response to wind shifts which is reliable, effective and relatively inexpensive, productively too.

The vertical axis wind turbine becomes therefore indeed profitable, fully and without precedent, thereby exploiting a solution which has seen in recent years a strong resurgence of interest for some of its advantages compared to horizontal axis types. Such advantages are now made fully attainable by the functional system for adjusting the angle of attack the blades according to the invention. Among said advantages it is worth noting that the vertical axis turbines always offer the same side to the wind coming from any direction (which is not the case with horizontal-axis turbines). The further adjustment of the angle of attack of the blades during the turbine rotation determines an increase in the turbine efficiency.

Since the blade in its motion about the axis of rotation takes both positions in which it is active, i.e. absorbs energy from the wind and thus "pushes" the turbine, and positions in which it is passive, i.e. it generates a resistance to the advancement in fluid current, the adjustment of the angle of attack can be carried out both to increase the active lift values, by acting on the angle when this produces an active "thrust", and to decrease the passive resistance values, by acting on the angle of attack in the positions where there is resistance to the advancement in the rotational motion.

The present invention has been described so far with reference to preferred embodiments thereof. It is to be understood that other embodiments may exist that relate to the same invention, all falling within the scope of protection of the attached claims. Among the variants obviously included in such a scope of protection are, in particular but not exclusively, the possibility of different engagement/tangential cooperation systems between the wheels, that is, with not necessarily toothed profiles but engaging, for example, by friction.

## Claims

1. A wind turbine with vertical central axis of rotation (1), comprising a central shaft (2) rotating about said axis, a plurality of blades (23) connected via beams (25) to said shaft (2) to the rotation about the central axis (1), each blade extending along an own axis having a prevalent development along said central axis (1) and being supported by the shaft (2) by support means adapted to allow an oscillation about said axis covering a given angle on a horizontal plane between two stop positions, the turbine further comprising automatic control means adapted to vary the angular position of each blade relative to its own axis as a function of the position of revolution of the blade itself about the central axis, wherein said automatic control means comprise: - a driving wheel (3) concentric to and fixedly connected to said shaft (2); respective first driven wheels (4) equal in number to said blades (23), arranged in a satellite fashion with respect to said axis (1), supported rotatably about their own axes (10) which are in turn brought in revolution integrally to said shaft (2), the first driven wheels being provided with an inner profile, and with an outer profile cooperating tangentially with an outer profile of said driving wheel (3); a planetary wheel (8) in turn arranged coaxially to said central axis (1), so as to be independent with the rotation of said shaft (2), and provided with an inner profile cooperating tangentially with said outer profile of said first driven wheels (4); resetting means for setting the position of said planetary wheel (8) adapted to keep it steady with unchanging wind and move it angularly in case of change in the wind direction by an angle corresponding to the angular shift of said wind direction; for each first driven wheel (4), a second driven wheel (5), rotatably supported about its own axis (11) which is in turn brought in revolution at the same rotation speed as said shaft (2), each second driven wheel (5) being provided with an outer profile cooperating tangentially with said inner profile of the relative first driven wheel (4); and transmission means (6, 7, 24) adapted to convert the relative rotation motion of the second driven wheels (5) in a reciprocating actuation of the respective blades (23) between said stop positions.

2. The turbine according to claim 1, wherein said driving wheel (3) and said first driven wheels (4) have the same diameter.

3. The turbine according to claim 1 or 2, wherein the diameter of said second driven wheels (5) is one sixth of the diameter of said first driven wheels (4).

4. The turbine according to any of the previous claims, wherein said resetting means are adapted to move said planetary wheel (8) at a speed equal to that of rotation of said driving wheel (3).

5. The turbine according to any of the previous claims, wherein said resetting means comprise an electronic system for detecting the wind direction and actuating means (9) adapted to drive said planetary wheel (8) as a function of the detection of said electronic system.

6. The turbine according to claim 5, wherein said actuating means comprise a motorized pinion wheel (9) cooperating tangentially with said planetary wheel (8).

7. The turbine according to any of claims 1 to 4, wherein said resetting means comprise rudder means (19) integral with said planetary wheel (8) and adapted to drive it by sail effect due to the change in the wind direction.

8. The turbine according to any of the previous claims, wherein said transmission means comprise a rod-crank connecting mechanism operatively connected to each of said second driven wheels (5).

9. The turbine according to claim 8, wherein said rod-crank mechanism is arranged between the corresponding driven wheel (5) and a half-wheel (6) with rack profile, adapted to oscillate about an axis of rotation (14) in turn integral with the revolution with said shaft (2), said transmission means further comprising a bar (7) extending radially from the shaft (2), having a first end (15) linked to said shaft (2) so as to be rotatable about its own axis, and a second end cooperating with the rack profile of said half-wheel (6) for being driven thereby with a reciprocating rotary motion.

10. The turbine according to claim 9, wherein said transmission means further comprise a plurality of wires (24) extending between the blades (23) and the respective bars (7)

11. The turbine according to claim 10, wherein for each blade (23) and relative bar (7), said wires are arranged in pairs, connected at respective heights of the blade, the wires of each pair (24) being adapted to wind on and unwind from said bar with one end, the winding of one wire on the bar (7) corresponding to the unwinding of the other with same winding and unwinding lengths, at the opposite end the wires of the pair being connected respectively to a tip and a tail of the airfoil of the blade.

12. The turbine according to any of the previous claims, wherein the tangential couplings between said wheels are geared couplings.

13. The turbine according to any of the previous claims, wherein said blades have a helical development.

14. The turbine according to any of claims 1 to 12, wherein said blades have a straight development.

## Patentansprüche

1. Windturbine mit einer vertikalen zentralen Drehachse (1), enthaltend eine zentrale Welle (2), die sich um die besagte Achse dreht, eine Mehrzahl von Schaufeln (23), die für die Drehung um die zentrale Achse (1) mittels Stäben (25) mit der Welle (2) verbunden sind, wobei sich jede Schaufel längs einer eigenen Achse erstreckt, die einen vorwiegenden Verlauf längst der zentralen Achse (1) hat und von der Welle (2) durch Halteeinrichtungen gehalten werden, die ausgelegt sind, um um die besagte Achse eine Oszillation zu gestatten, die einen gegebenen Winkel auf einer horizontalen Ebene zwischen zwei Stopp-Positionen abdeckt, wobei die Turbine ferner automatische Steuereinrichtungen enthält, die ausgelegt sind, die Winkelposition jeder Schaufel relativ zu ihrer eigenen Achse als eine Funktion der Position der Umdrehung der Schaufel selbst um die zentrale Achse zu variieren, wobei die automatischen Steuereinrichtungen enthalten: - ein Antriebsrad (3), das konzentrisch ist zu und fest verbunden ist mit der Welle (2); jeweilige erste angetriebene Räder (4) in gleicher Anzahl zu den Schaufeln (23), angeordnet in einer Satelitenweise bezüglich der Achse (1) um ihre eigenen Achsen (10) drehbar gehalten, die wiederum integral mit der Welle (2) in Umdrehung gebracht werden, wobei die ersten angetriebenen Räder mit einem Innenprofil und einem Außenprofil versehen sind, das tangential mit dem Außenprofil des Antriebsrades (3) zusammenwirkt; ein Planetenrad (8), das wiederum koaxial zu der zentralen Achse (1) angeordnet ist, um bezüglich der Drehung der Welle (2) unabhängig zu sein, und versehen mit einem Innenprofil ist, das tangential mit dem Außenprofil der ersten angetriebenen Räder (4) zusammenwirkt; Rückstelleinrichtungen, um die Position des Planetenrades (8) einzustellen, ausgelegt, um es bei sich nicht veränderndem Wind fest zu halten und es bei Änderung der Windrichtung winkelmäßig um einen Winkel zu bewegen, der der winkelmäßigen Verstellung der Windrichtung entspricht; für jedes erste angetriebene Rad (4) ein zweites angetriebenes Rad (5), das drehbar um seine eigene Achse (11) gehalten ist, die wiederum mit derselben Drehgeschwindigkeit wie die Welle (2) in Umdrehung gebracht wird, wobei jedes zweite angetriebene Rad (5) mit einem Außenprofil versehen ist, das tangential mit dem Innenprofil des jeweiligen ersten angetriebenen Rades (4) zusammenwirkt; und Übertragungseinrichtungen (6, 7, 24), die ausgelegt sind, um die relative Drehbewegung der zweiten angetriebenen Räder (5) in eine hin und her gehende Betätigung der jeweiligen Schaufeln (23) zwischen den Stopp-Positionen zu konvertieren.

2. Turbine nach Anspruch 1, wobei das Antriebsrad (3) und die ersten angetriebenen Räder (4) denselben Durchmesser haben.

3. Turbine nach Anspruch 1 oder 2, wobei der Durchmesser der zweiten angetriebenen Räder (5) ein Sechstel des Durchmessers der ersten angetriebenen Räder (4) ist.

4. Turbine nach einem der vorhergehenden Ansprüche, wobei die Rückstelleinrichtungen ausgelegt sind, um das Planetenrad (8) mit einer Geschwindigkeit gleich jener der Drehung des Antriebsrades (3) zu bewegen.

5. Turbine nach einem der vorhergehenden Ansprüche, wobei die Rückstelleinrichtungen ein elektronisches System zum Detektieren der Windrichtung und Betätigungseinrichtungen (9) enthalten, die ausgelegt sind, um das Planetenrad (8) als eine Funktion der Detektion des elektronischen Systems anzutreiben.

6. Turbine nach Anspruch 5, wobei die Betätigungseinrichtungen ein motorisiertes Ritzelrad (9) enthalten, das tangential mit dem Planetenrad (8) zusammenwirkt.

7. Turbine nach einem der Ansprüche 1 bis 4, wobei die Rückstelleinrichtungen Rudereinrichtungen (19) enthalten, die integral mit dem Planetenrad (8) sind und ausgelegt sind, um es durch einen Segeleffekt aufgrund der Änderung der Windrichtung anzutreiben.

8. Turbine nach einem der vorhergehenden Ansprüche, wobei die Übertragungseinrichtungen einen Stangen-Kurbel-Verbindungsmechanismus enthalten, der operativ mit jedem der zweiten angetriebenen Räder (5) verbunden ist.

9. Turbine nach Anspruch 8, wobei der Stangen-Kurbel-Mechanismus zwischen dem entsprechenden angetriebenen Rad (5) und einem Halbrad (6) mit einem Zahnprofil angeordnet ist, das ausgelegt ist, um um eine Drehachse (14) zu oszillieren, die wiederum integral mit der Umdrehung mit der Welle (2) ist, wobei die Übertragungseinrichtungen ferner einen sich radial von der Welle (2) aus erstreckenden Stab (7) enthalten, der ein erstes Ende (15), das mit der Welle (2) verbunden ist, um um seine eigene Achse drehbar zu sein, und ein zweites Ende hat, das mit dem Zahnprofil des zweiten Halbrades (6) zusammenwirkt, um dadurch mit einer hin und her gehenden Drehbewegung angetrieben zu werden.

10. Turbine nach Anspruch 9, wobei die Übertragungseinrichtungen ferner eine Mehrzahl von Drähten (24) enthalten, die sich zwischen den Schaufeln (23) und den jeweiligen Stäben (7) erstrecken.

11. Turbine nach Anspruch 10, wobei für jede Schaufel (23) und entsprechenden Stab (7) die Drähte in Paaren angeordnet sind, die an entsprechenden Höhen der Schaufeln angeschlossen sind, wobei die Drähte jedes Paares (24) ausgelegt sind, sich mit einem Ende aufzuwickeln auf und abzuwickeln von dem Stab, wobei das Aufwickeln eines Drahtes auf dem Stab (7) dem Abwickeln des anderen mit denselben Aufwickel- und Abwickellängen entspricht, wobei an den entgegengesetzten Enden die Drähte des Paares jeweils mit einer Spitze und einem Schwanz der Tragfläche der Schaufel verbunden sind.

12. Turbine nach einem der vorhergehenden Ansprüche, wobei die tangentialen Kopplungen zwischen den Rädern verzahnte Kopplungen sind.

13. Turbine nach einem der vorhergehenden Ansprüche, wobei die Schaufeln einen spiralförmigen Verlauf haben.

14. Turbine nach einem der Ansprüche 1 bis 12, wobei die Schaufeln einen geraden Verlauf haben.

## Revendications

1. Une turbine éolienne à axe central vertical de rotation (1), comprenant un arbre central (2) monté pivotant selon ledit axe, une pluralité de pales (23) solidaires dudit arbre (2) via des pattes radiales (25) pour la rotation autour de l'axe central (1), chaque pale s'étendant le long de son axe propre ayant un développement prédominant le long dudit axe central (1) et étant supportée par l'arbre (2) par des moyens de support adaptés pour permettre une oscillation autour dudit axe selon une amplitude angulaire donnée sur un plan horizontal entre deux positions d'arrêt, la turbine comprenant en outre des moyens de commande automatique adaptés pour faire varier la position angulaire de chaque pale par rapport à son propre axe en fonction de la position de révolution de la pale elle-même autour de l'axe central, dans laquelle lesdits moyens de commande automatique comprennent : - une roue menante (3) concentrique au dit arbre (2) et solidaire de ce dit arbre (2); des premières roues menées respectives (4), en nombre égal à celui desdites pales (23), agencées de façon satellitaire par rapport audit axe (1), supportées de manière rotative autour de leur propre axe (10) qui sont à leur tour amenés en rotation en étant solidaires dudit arbre (2), les premières roues menées étant munies d'un profil intérieur et d'un profil extérieur coopérant tangentiellement avec le profil extérieur de ladite roue menante (3); une roue planétaire (8) à son tour disposée de façon coaxiale audit axe central (1), de manière à être indépendante de la rotation dudit arbre (2), et pourvue d'un profil intérieur coopérant tangentiellement avec ledit profil extérieur desdites premières roues menées (4); des moyens de réinitialisation pour réinitialiser la position de ladite roue planétaire (8) adaptés pour la maintenir stable avec un vent non variable et la déplacer angulairement en cas de changement de la direction du vent d'un angle correspondant au décalage angulaire de ladite direction du vent; pour chaque première roue menée (4), une seconde roue menée (5), montée de manière rotative autour de son propre axe (11) qui est à son tour amené en rotation à la même vitesse de rotation que ledit arbre (2), chaque seconde roue menée (5) ayant un profil extérieur coopérant tangentiellement avec ledit profil intérieur de la première roue menée correspondante (4) ; et des moyens de transmission (6, 7, 24) adaptés pour convertir le mouvement de rotation relatif des deuxièmes roues menées (5) dans un actionnement alternatif des pales respectives (23) entre lesdites positions d'arrêt.

2. La turbine selon la revendication 1, dans laquelle ladite roue menante (3) et lesdites premières roues menées (4) ont le même diamètre.

3. La turbine selon l'une des revendications 1 et 2, dans laquelle le diamètre desdites secondes roues menées (5) est égal à un sixième du diamètre desdites premières roues menées (4).

4. La turbine selon l'une quelconque des revendications précédentes, dans laquelle lesdits moyens de réinitialisation sont adaptés pour déplacer ladite roue planétaire (8) à une vitesse égale à celle de la rotation de ladite roue menante (3).

5. La turbine selon l'une quelconque des revendications précédentes, dans laquelle lesdits moyens de réinitialisation comprennent un système électronique pour détecter la direction du vent et des moyens d'actionnement (9) adaptés pour commander ladite roue planétaire (8) en fonction de la détection par ledit système électronique.

6. La turbine selon la revendication 5, dans laquelle lesdits moyens d'actionnement comprennent une roue à pignon motorisée (9) coopérant tangentiellement avec ladite roue planétaire (8).

7. La turbine selon l'une quelconque des revendications 1 à 4, dans laquelle lesdits moyens de réinitialisation comprennent des moyens de gouvernail (19) solidaires de ladite roue planétaire (8) et adaptés pour l'entraîner par effet de voile suite à un changement de la direction du vent.

8. La turbine selon l'une quelconque des revendications précédentes, dans laquelle lesdits moyens de transmission comprennent un mécanisme de connexion à bielle-manivelle relié de manière opérationnelle à chacune desdites secondes roues menées (5).

9. La turbine selon la revendication 8, dans laquelle ledit mécanisme bielle-manivelle est agencé entre la roue menée correspondante (5) et une demi-roue (6) à profil de crémaillère, adaptée pour osciller autour d'un axe de rotation (14) solidaire à son tour en révolution avec ledit arbre (2), lesdits moyens de transmission comprenant en outre une barre (7) s'étendant radialement à partir de l'arbre (2), ayant une première extrémité (15) reliée audit arbre (2) de façon à pouvoir tourner autour de son propre axe, et une seconde extrémité coopérant avec le profil de crémaillère de ladite demi-roue (6) pour être ainsi commandée avec un mouvement de rotation alternatif.

10. La turbine selon la revendication 9, dans laquelle lesdits moyens de transmission comprennent en outre une pluralité de fils (24) s'étendant entre les pales (23) et les barres respectives (7).

11. La turbine selon la revendication 10, dans laquelle pour chaque pale (23) et barre correspondante (7), lesdits fils sont agencés en paires, connectés à des hauteurs respectives de la pale, les fils de chaque paire (24) étant adaptés pour s'enrouler sur et se dérouler de ladite barre à une extrémité, l'enroulement d'un fil sur la barre (7) correspondant au déroulement de l'autre avec les mêmes longueurs d'enroulement et de déroulement, les fils de la paire étant reliés, à leur extrémité opposées, respectivement au bord avant et à la queue du profil de voilure de la pale.

12. La turbine selon l'une quelconque des revendications précédentes, dans laquelle les accouplements tangentiels entre lesdites roues sont des accouplements à engrenages.

13. La turbine selon l'une quelconque des revendications précédentes, dans laquelle lesdites pales ont un développement hélicoïdal.

14. La turbine selon l'une quelconque des revendications 1 à 12, dans laquelle lesdites pales ont un développement rectiligne.
